(19) Europäisches Patentamt / European Patent Office / Office européen des brevets

(11) **EP 2 545 486 B1**

(12) **EUROPÄISCHE PATENTSCHRIFT**

(45) Veröffentlichungstag und Bekanntmachung des Hinweises auf die Patenterteilung:
**10.05.2017 Patentblatt 2017/19**

(21) Anmeldenummer: **11707806.3**

(22) Anmeldetag: **07.03.2011**

(51) Int Cl.:
*G06F 21/34* (2013.01)   *H04L 9/08* (2006.01)
*H04L 9/32* (2006.01)

(86) Internationale Anmeldenummer:
**PCT/EP2011/001107**

(87) Internationale Veröffentlichungsnummer:
**WO 2011/110318 (15.09.2011 Gazette 2011/37)**

(54) **VERFAHREN ZUM AUTHENTISIEREN EINES PORTABLEN DATENTRÄGERS**

METHOD FOR AUTHENTICATING A PORTABLE DATA CARRIER

PROCÉDÉ D'AUTHENTIFICATION D'UN SUPPORT DE DONNÉES PORTABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.03.2010 DE 102010010950**

(43) Veröffentlichungstag der Anmeldung:
**16.01.2013 Patentblatt 2013/03**

(73) Patentinhaber: **Giesecke & Devrient GmbH 81677 München (DE)**

(72) Erfinder:
• **EICHHOLZ, Jan**
  **80997 München (DE)**
• **MEISTER, Gisela**
  **81737 München (DE)**

(56) Entgegenhaltungen:
**WO-A2-2006/089101**

• **KIYOMOTO S ET AL: "Anonymous attribute authentication scheme using self-blindable certificates", INTELLIGENCE AND SECURITY INFORMATICS, 2008. ISI 2008. IEEE INTERNATIONAL CONFERENCE ON, IEEE, PISCATAWAY, NJ, USA, 17. Juni 2008 (2008-06-17), Seiten 215-217, XP031286471, ISBN: 978-1-4244-2414-6**

• **"Chapter 13: Key Management Techniques ED - Menezes A J; Van Oorschot P C; Vanstone S A", [Online] 1. Oktober 1996 (1996-10-01), HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 543 - 590, XP001525013, ISBN: 978-0-8493-8523-0 Gefunden im Internet: URL:http://www.cacr.math.uwaterloo.ca/hac/ > Abschnitt 13.4.4 Abschnitt13.5.2**

• **"Chapter 12: Key Establishment Protocols ED - Menezes A J; Van Oorschot P C; Vanstone S A", [Online] 1. Oktober 1996 (1996-10-01), HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 489 - 541, XP001525012, ISBN: 978-0-8493-8523-0 Gefunden im Internet: URL:http://www.cacr.math.uwaterloo.ca/hac/ > Abschnitt 12.6.1 Abschnitt 12.6.2 Abschnitt 12.6.3**

**Beschreibung**

Die vorliegende Erfindung betrifft ein Verfahren zur Authentisierung eines portablen Datenträgers gegenüber einer Terminaleinrichtung sowie einen entsprechend eingerichteten Datenträger und eine Terminaleinrichtung.

Ein portabler Datenträger, beispielsweise in Form eines elektronischen Ausweisdokuments, umfasst einen integrierten Schaltkreis mit einem Prozessor und einem Speicher. In dem Speicher sind einen Nutzer des Datenträgers betreffende Daten gespeichert. Auf dem Prozessor ist eine Authentisierungsapplikation ausführbar, über welche sich der Datenträger gegenüber einer Terminaleinrichtung authentisieren kann, im Fall eines Ausweisdokuments beispielsweise bei einer Grenzkontrolle oder dergleichen.

Während eines solchen Authentisierungsverfahrens wird eine gesicherte Datenkommunikation zwischen dem Datenträger und der Terminaleinrichtung vorbereitet, indem ein geheimer Kommunikationsschlüssel zur symmetrischen Verschlüsselung einer nachfolgenden Datenkommunikation vereinbart wird, beispielsweise mittels des bekannten Schlüsselaustauschverfahrens nach Diffie und Hellman oder anderen geeigneten Verfahren. Weiterhin verifiziert in der Regel zumindest das Terminal die Authentizität des Datenträgers, beispielsweise anhand eines Zertifikats.

WO 2006/089101 A2 zeigt die Ableitung symmetrischer Schlüssel aus einem Masterschlüssel und einer Identität. Verschiedenste kryptografische Verfahren, unter anderem zu identitätsabhängigen asymmetrischen Schlüsseln und zur symmetrischen Schlüsselableitung, sind im "Handbook of Applied Cryptography" von Menezes et al. beschrieben.

In dem Artikel "Anonymous Attribute Authentication Scheme Using Self-Blindable Certificates" von Kiyomoto et al., ISI 2008, wird eine anonyme Authentisierung unter Verwendung eines für die Sitzung modifizierten, individuellen öffentlichen Schlüssel zusammen mit einem entsprechend modifizierten individuellen Zertifikat des öffentlichen Schlüssel beschrieben.

Zur Durchführung eines Verfahrens zur Vereinbarung des geheimen Kommunikationsschlüssels ist es notwendig, dass sowohl das Terminal als auch der Datenträger jeweils einen geheimen Schlüssel und einen öffentlichen Schlüssel bereitstellen. Das Zertifikat des Datenträgers kann beispielsweise dessen öffentlichen Schlüssel betreffen.

Wird jeder Datenträger einer Menge oder Gruppe von Datenträgern mit einem individuellen Schlüsselpaar, bestehend aus einem öffentlichen Schlüssel und einem geheimen Schlüssel, personalisiert, ergeben sich Probleme hinsichtlich der Anonymität des Nutzers des Datenträgers. Es wäre dann möglich, jede Verwendung des Datenträgers eindeutig dem entsprechenden Nutzer zuzuordnen und auf diese Weise beispielsweise ein vollständiges Bewegungsprofil des Nutzers anzulegen. Um diesem Aspekt gerecht zu werden, ist vorgeschlagen worden, eine Mehrzahl oder Gruppe von Datenträgern mit jeweils einem identischen, so genannten Gruppenschlüsselpaar, bestehend aus einem öffentlichen Gruppenschlüssel und einem geheimen Gruppenschlüssel, auszustatten. Damit kann die Anonymität eines Nutzers, zumindest innerhalb der Gruppe, wieder hergestellt werden. Nachteilig an dieser Lösung ist, dass in dem Fall, dass einer der Datenträger der Gruppe kompromittiert wird, die gesamte Gruppe von Datenträgern ausgetauscht werden muss. Wenn beispielsweise der geheime Gruppenschlüssel eines der Datenträger der Gruppe ausgespäht worden ist, kann keiner der Datenträger der Gruppe sicher weiterverwendet werden. Aufwand und Kosten einer notwendigen Austauschaktion können enorm sein.

Aufgabe der vorliegenden Erfindung ist es, ein Authentisierungsverfahren vorzuschlagen, welches die Anonymität des Nutzers wahrt und bei dem die Kompromittierung eines der Datenträger keine negativen Auswirkungen auf die Sicherheit anderer Datenträger hat.

Diese Aufgabe wird durch ein Verfahren, einen Datenträger, eine Terminaleinrichtung und ein System mit den Merkmalen der nebengeordneten Ansprüche gelöst. Vorteilhafte Ausgestaltungen und Weiterbildungen sind in den abhängigen Ansprüchen angegeben.

Ein erfindungsgemäßes Verfahren zum Authentisieren eines portablen Datenträgers gegenüber einer Terminaleinrichtung umfasst die folgenden Schritte: In dem Datenträger wird ein öffentlicher Sitzungsschlüssel von einem datenträgerindividuellen öffentlichen Schlüssel abgeleitet. Dieser datenträgerindividuelle öffentliche Schlüssel ist seinerseits von einem öffentlichen Gruppenschlüssel abgeleitet worden. Weiterhin wird in dem Datenträger ein geheimer Sitzungsschlüssel von einem datenträgerindividuellen geheimen Schlüssel abgeleitet, welcher seinerseits von einem geheimen Gruppenschlüssel abgeleitet worden ist. Der datenträgerindividuelle öffentliche Schlüssel und der datenträgerindividuelle geheime Schlüssel sind in dem Datenträger gespeichert, nicht jedoch der geheime Gruppenschlüssel und der öffentliche Gruppenschlüssel. Im Rahmen der Authentisierung des Datenträgers gegenüber der Terminaleinrichtung werden der öffentliche und der geheime Sitzungsschlüssel verwendet. Der Datenträger wird seinen geheimen Sitzungsschlüssel verwenden. Den öffentlichen Sitzungsschlüssel stellt der Datenträger für die Terminaleinrichtung bereit, welche diesen im Rahmen der Authentisierung des Datenträgers verwendet.

Insbesondere kann zwischen dem Datenträger und der Terminaleinrichtung ein geheimer Kommunikationsschlüssel vereinbart werden. Der Datenträger weist dazu den öffentlichen und den geheimen Sitzungsschlüssel auf. Die Terminaleinrichtung weist ihrerseits dazu einen öffentlichen Terminalschlüssel und einen geheimen Terminalschlüssel auf. Schließlich verifiziert die Terminaleinrichtung den öffentlichen Sitzungsschlüssel des Datenträgers.

Ein erfindungsgemäßer portabler Datenträger umfasst demnach einen Prozessor, einen Speicher und eine Datenkommunikationsschnittstelle zur Datenkommunikation mit einer Terminaleinrichtung sowie eine Authentisierungseinrichtung. Diese ist eingerichtet, einen geheimen Sitzungsschlüssel aus einem in dem Speicher gespeicherten datenträgerindividuellen geheimen Schlüssel abzuleiten. Die Authentisierungseinrichtung ist weiter eingerichtet, einen öffentlichen Sitzungsschlüssel aus einem in dem Speicher gespeicherten datenträgerindividuellen öffentlichen Schlüssel abzuleiten. Ferner kann sie einen geheimen Kommunikationsschlüssel mit der Terminaleinrichtung zu vereinbaren. Dazu verwendet die Authentisierungseinrichtung den öffentlichen Sitzungsschlüssel und den geheimen Sitzungsschlüssel.

Eine erfindungsgemäße Terminaleinrichtung schließlich ist zur Datenkommunikation mit einem erfindungsgemäßen portablen Datenträger eingerichtet sowie zum Vereinbaren eines geheimen Kommunikationsschlüssels mit dem Datenträger unter Verwendung eines öffentlichen Terminalschlüssels und eines geheimen Terminalschlüssels. Die Terminaleinrichtung ist weiter eingerichtet, einen öffentlichen Sitzungsschlüssel des Datenträgers, welcher von einem öffentlichen Gruppenschlüssel über einen datenträgerindividuellen öffentlichen Schlüssel abgeleitet worden ist, zu verifizieren.

In dem erfindungsgemäßen Verfahren ist ein Speichern des geheimen Gruppenschlüssels in dem Datenträger nicht mehr notwendig. Demnach kann ein solcher bei einem Angriff auf den Datenträger auch nicht ausgespäht werden. Geheime Sitzungsschlüssel anderer, nicht angegriffener Datenträger einer Gruppe von Datenträgern können weiterverwendet werden. Ein Verfolgen des Nutzers des Datenträgers anhand des geheimen Sitzungsschlüssels des Datenträgers, welcher eventuell in einem challenge-response-Verfahren zur Authentifikation gegenüber der Terminaleinrichtung eingesetzt wird, ist nicht möglich, da sich dieser Sitzungsschlüssel von einer Verwendung zur nächsten ändert.

Vorzugsweise verifiziert die Terminaleinrichtung den öffentlichen Sitzungsschlüssel des Datenträgers mittels eines Zertifikats des öffentlichen Gruppenschlüssels, welches auf dem Datenträger gespeichert ist. Dazu prüft die Terminaleinrichtung zunächst das Zertifikat. Danach vollzieht die Terminaleinrichtung die Ableitung des öffentlichen Sitzungsschlüssels aus dem öffentlichen Gruppenschlüssel über den datenträgerindividuellen öffentlichen Schlüssel nach. Die dafür notwendigen Ableitungsinformationen werden von dem Datenträger bereitgestellt. Auf diese Weise kann der Datenträger als ein Datenträger der Gruppe, welche dem Gruppenschlüsselpaar zugeordnet sind, authentisiert werden, jedoch nicht anhand eines datenträgerindividuellen Zertifikats - welches erfindungsgemäß nicht vorgesehen ist - verfolgt werden. Lediglich das allen Datenträgern der Gruppe gleiche Zertifikat des öffentlichen Gruppenschlüssels ist auf dem Datenträger gespeichert, wodurch die Anonymität des Nutzers des Datenträgers gewahrt bleibt.

Gemäß einer bevorzugten Ausführungsform werden der datenträgerindividuelle öffentliche Schlüssel und der datenträgerindividuelle geheime Schlüssel in einer Personalisierungsphase des Datenträgers von dem öffentlichen Gruppenschlüssel und dem geheimen Gruppenschlüssel abgeleitet und in dem Datenträger gespeichert. Ebenfalls in dieser Phase kann das Zertifikat des öffentlichen Gruppenschlüssels in den Datenträger eingebracht und gespeichert werden.

Vorzugsweise wird der datenträgerindividuelle geheime Schlüssel von dem geheimen Gruppenschlüssel unter Verwendung einer ersten Zufallszahl abgeleitet. Dazu kann jede geeignete Operation verwendet werden, welche als Eingabedaten - unter anderem - den geheimen Gruppenschlüssel sowie die erste Zufallszahl aufnehmen zu dem datenträgerindividuellen geheimen Schlüssel verarbeiten kann. Beispielsweise können mathematische Operationen, wie Multiplikation, Exponentiation oder ähnliche, zur Anwendung kommen. Der datenträgerindividuelle öffentliche Schlüssel kann dann mittels des zuvor abgeleiten datenträgerindividuellen geheimen Schlüssels abgeleitet werden. Dies ist z.B. dann sinnvoll, wenn auch der öffentliche Gruppenschlüssel mit Hilfe des geheimen Gruppenschlüssels gebildet worden ist, beispielsweise mittels modularer Exponentiation, wie aus dem Diffie-Hellman-Schlüsselaustauschverfahren bekannt. Es ist auch möglich, den datenträgerindividuellen öffentlichen Schlüssel in anderer Weise von dem öffentlichen Gruppenschlüssel abzuleiten.

In ähnlicher Weise erfolgt auch die Ableitung des geheimen Sitzungsschlüssels und des öffentlichen Sitzungsschlüssels von dem datenträgerindividuellen geheimen Schlüssel bzw. dem datenträgerindividuellen öffentlichen Schlüssel randomisiert, also abhängig von einer zweiten Zufallszahl. Auch hier können verschiedene Ableitungsoperationen verwendet werden, welche als Eingangsdaten zumindest jeweils den jeweiligen datenträgerindividuellen Schlüssel und die zweite Zufallszahl erlauben. In der Regel unterscheidet sich die Ableitung des geheimen Sitzungsschlüssels von der Ableitung des öffentlichen Sitzungsschlüssels. Allerdings wird für gewöhnlich für die Ableitung beider Schlüssel des Sitzungsschlüsselpaars dieselbe zweite Zufallszahl verwendet. Da bei jeder Verwendung des Datenträgers, d.h. bei jeder Authentisierung gegenüber einer Terminaleinrichtung, ein neues Sitzungsschlüsselpaar abgeleitet wird, ist ein Rückverfolgen des Datenträgers anhand der Sitzungsschlüssel nicht möglich.

Gemäß einer bevorzugten Ausführungsform des erfindungsgemäßen Verfahrens wird der geheime Kommunikationsschlüssel mittels eines bekannten Diffie-Hellman-Schlüsselaustauschverfahrens vereinbart. Diesem liegt eine vorgegebene Primitivwurzel modulo einer vorgegebenen Primzahl zugrunde. Der datenträgerindividuelle geheime Schlüssel wird von dem geheimen Gruppenschlüssel durch Multiplikation mit der ersten Zufallszahl abgeleitet. Der datenträgerindividuelle öffentliche Schlüssel berechnet sich aus einer Exponentiation der Primitivwurzel mit dem datenträgerindividuellen geheimen Schlüssel. Dabei ist der öffentliche Gruppenschlüssel durch Exponentiation der Primitivwurzel mit dem geheimen Gruppenschlüssel gebildet. Das erfindungsgemäße Verfahren - mit vorzugsweise randomisiert wechselnden Sitzungsschlüsseln - lässt sich somit ohne wesentliche Änderungen in bekannte ähnliche Protokolle - welche ein fest an den Datenträger gebundenes Schlüsselpaar vorsehen - und das Diffie-Hellman-Verfahren verwenden, integrieren.

Der geheime Sitzungsschlüssel kann durch Multiplikation des datenträgerindividuellen geheimen Schlüssels mit der zweiten Zufallszahl gebildet werden. Dann wird der öffentliche Sitzungsschlüssel durch Exponentiation des datenträgerindividuellen Schlüssels mit der zweiten Zufallszahl abgeleitet. Auf diese Weise ergibt sich, dass sich der öffentliche Sitzungsschlüssel dadurch berechnen lässt, dass eine Exponentiation des öffentlichen Gruppenschlüssels mit dem Produkt der ersten mit der zweiten Zufallszahl gebildet wird.

Damit das Terminal den öffentlichen Sitzungsschlüssel des Datenträgers verifizieren kann, sendet der Datenträger den öffentlichen Sitzungsschlüssel, das Produkt der ersten mit der zweiten Zufallszahl sowie das Zertifikat des öffentlichen Gruppenschlüssels an die Terminaleinrichtung.

Die Terminaleinrichtung verifiziert den öffentlichen Sitzungsschlüsselnachdem sie das Zertifikat des öffentlichen Gruppenschlüssels geprüft hat -, indem sie eine Exponentiation des öffentlichen Gruppenschlüssels mit dem Produkt der beiden Zufallszahlen bildet. Diese Berechnung ergibt, wie vorstehend beschrieben, gerade den öffentlichen Sitzungsschlüssel - solange dieser in der vorgeschriebenen Weise von dem öffentlichen Gruppenschlüssel über den datenträgerindividuellen öffentlichen Schlüssel abgeleitet worden ist. Der öffentliche Sitzungsschlüssel kann also alleine anhand des öffentlichen Gruppenschlüssels verifiziert werden. Auf diese Weise wird der Datenträger, unter Beachtung der Anonymität des Nutzers des Datenträger und ohne dass es eines datenträgerindividuellen Zertifikats bedarf, als dem öffentlichen Gruppenschlüssel zugehörig authentisiert.

Als Datenträger wird vorliegend beispielsweise ein elektronisches Ausweisdokument, eine Chipkarte, eine SIM-Karte, eine sichere Multimediakarte oder ein sicherer USB-Token verstanden. Die Terminaleinrichtung kann ein beliebiger Authentisierungspartner sein. Insbesondere kann es ein lokales oder ein entferntes Terminal, ein entfernter Server oder ein anderer Datenträger.

Wie vorstehend mehrfach angedeutet, werden zum Ableiten datenträgerindividueller geheimer Schlüssel und datenträgerindividueller öffentlicher Schlüssel einer Mehrzahl verschiedener Datenträger, die eine Gruppe von Datenträgern bilden, jeweils dieselben öffentlichen bzw. geheimen Gruppenschlüssel verwendet. Es ist natürlich möglich, mehrere Gruppen von Datenträgern vorzusehen, welche jeweils einem eigenen Gruppenschlüsselpaar zugeordnet sind.

Im Folgenden wird die Erfindung mit Bezug auf die beiliegenden Zeichnungen beispielhaft beschrieben. Darin zeigen:

Figur 1 schematisch eine bevorzugte Ausführungsform eines erfindungsgemäßen Datenträgers und die

Figuren 2 und 3 Schritte einer bevorzugten Ausführungsform des erfindungsgemäßen Verfahrens zum Authentisieren des Datenträgers aus Fig. 1 gegenüber einer Terminaleinrichtung.

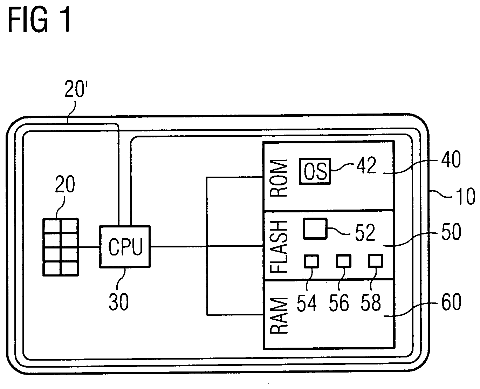

Mit Bezug auf Fig. 1 umfasst ein Datenträger 10, der hier als Chipkarte dargestellt ist, Datenkommunikationsschnittstellen 20, 20', einen Prozessor 30 sowie verschiedene Speicher 40, 50 und 60. Der Datenträger 10 kann auch in anderer Bauform vorliegen.

Als Datenkommunikationsschnittstellen 20, 20' umfasst der Datenträger 10 ein Kontaktfeld 20 zur kontaktbehafteten Datenkommunikation sowie eine Antennenspule 20' zur kontaktlosen Datenkommunikation. Alternative Datenkommunikationsschnittstellen können vorgesehen sein. Es ist weiterhin möglich, dass der Datenträger 10 lediglich eine Art der Datenkommunikation unterstützt, also lediglich kontaktbehaftet oder kontaktlos.

Der nicht flüchtige, nicht wiederbeschreibbare ROM-Speicher 40 umfasst ein Betriebssystem (OS) 42 des Datenträgers 10, welches den Datenträger 10 steuert. Zumindest Teile des Betriebssystems 42 können auch in dem nicht flüchtigen, wiederbeschreibbaren Speicher 50 gespeichert sein. Dieser kann beispielsweise als FLASH-Speicher vorliegen.

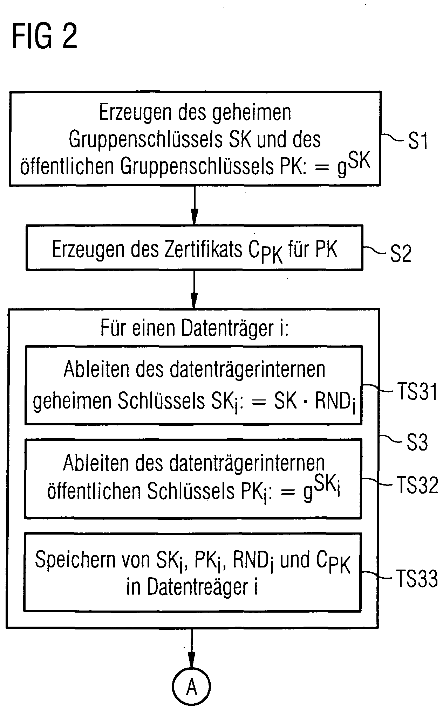

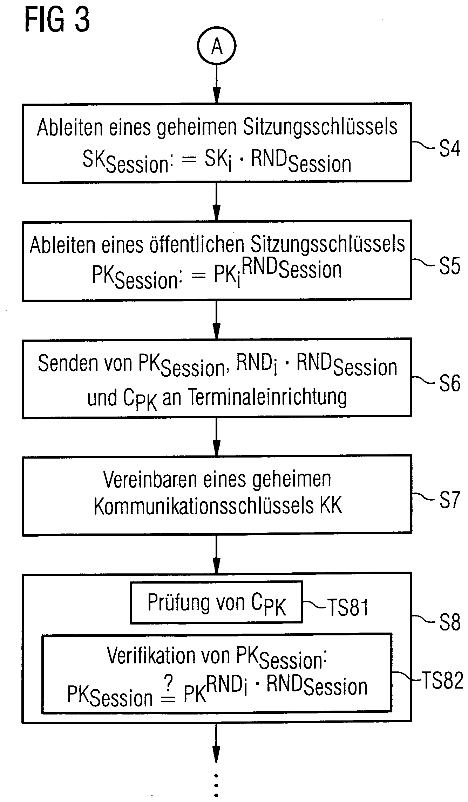

Der Speicher 50 umfasst eine Authentisierungseinrichtung 52, mittels welcher eine Authentisierung des Datenträgers 10 gegenüber einer Terminaleinrichtung durchgeführt werden kann. Dabei finden die ebenfalls in dem Speicher gespeicherten, datenträgerindividuellen Schlüssel 54, 56 sowie ein digitales Zertifikat 58 ihre Anwendung. Die Funktionsweise der Authentisierungseinrichtung 52, die Schlüssel 54, 56 und das Zertifikat 58 sowie deren Rolle während eines Authentisierungsverfahrens werden mit Bezug auf die Figuren 2 und 3 genauer beschrieben. Der Speicher 50 kann weitere Daten enthalten, beispielsweise seinen Nutzer betreffende Daten.

Der flüchtige, wiederbeschreibbare RAM-Speicher 60 dient dem Datenträger 10 als Arbeitsspeicher.

Der Datenträger 10 kann, wenn er beispielsweise ein elektronisches Ausweisdokument darstellt, weitere Merkmale umfassen (nicht gezeigt). Diese können sichtbar auf einer Oberfläche des Datenträgers 10 aufgebracht, beispielsweise aufgedruckt, sein und den Nutzer des Datenträgers bezeichnen, beispielsweise durch seinen Namen oder ein Foto.

Mit Bezug auf die Figuren 2 und 3 wird nun eine Ausführungsform des Verfahrens zur Authentisierung des Datenträgers 10 gegenüber einer Terminaleinrichtung genauer beschrieben. In Fig. 2 sind vorbereitende Schritte gezeigt.

Diese können beispielsweise während der Herstellung des Datenträgers 10, etwa in einer Personalisierungsphase, durchgeführt werden.

In einem ersten Schritt S1 werden ein geheimer Gruppenschlüssel SK sowie ein öffentlicher Gruppenschlüssel PK gebildet. Der Schlüssel PK berechnet sich als Ergebnis einer Exponentiation einer vorgegebenen Primitivwurzel g modulo einer vorgegebenen Primzahl p. Sämtliche im Folgenden beschriebenen Berechnungen sind modulo der Primzahl p zu lesen, ohne dass dies stets explizit angegeben ist. Die beiden Schlüssel SK und PK bilden ein Gruppenschlüsselpaar und stellen die Grundlage für die nachstehend beschriebene Schlüsselarchitektur für eine Gruppe von gleichartigen Datenträgern 10 bereit.

In Schritt S2 wird ein Zertifikat $C_{PK}$ gebildet, welches zur Verifikation des öffentlichen Gruppenschlüssels PK dient.

Schritt S3 findet während der Personalisierung des Datenträgers 10 statt. Dabei wird der Datenträger 10, welcher einen Datenträger einer vorgegebenen Gruppe von Datenträgern darstellt, mit einem datenträgerindividuellen Schlüsselpaar SKi, PKi ausgestattet, welches randomisiert, d.h. abhängig von einer ersten Zufallszahl $RND_i$, von dem Gruppenschlüsselpaar SK, PK abgeleitet wird. Auf diese Weise wird jeder Datenträger 10 der Gruppe mit einem eigenen, datenträgerindividuellen Schlüsselpaar ausgestattet, welches sich von einem entsprechenden Schlüsselpaar eines anderen Datenträgers der Gruppe - aufgrund der randomisierten Komponente bei der Schlüsselableitung - unterscheidet. Auf der anderen Seite verbindet alle Datenträger 10 der Gruppe die Tatsache, dass ihr Schlüsselpaar von dem gleichen Gruppenschlüsselpaar SK, PK abgeleitet worden ist.

In Teilschritt TS31 wird ein datenträgerindividueller geheimer Schlüssel SKi abgeleitet, indem der geheime Gruppenschlüssel SK mit der Zufallszahl $RND_i$ multipliziert wird.

Der datenträgerindividuelle öffentliche Schlüssel PKi berechnet sich in Teilschritt TS32 anschließend als Ergebnis einer Exponentiation der vorstehend erwähnten Primitivwurzel g mit dem zuvor gebildeten, datenträgerindividuellen geheimen Schlüssel SKi.

Die derart abgeleiteten Schlüssel SKi und PKi werden in Teilschritt TS33 zusammen mit der Zufallszahl $RND_i$ und dem Zertifikat $C_{PK}$ in dem Datenträger 10 gespeichert. Dieser ist damit eingerichtet, mittels seiner Authentisierungseinrichtung 52 eine Authentisierung gegenüber einer Terminaleinrichtung durchzuführen, wie dies mit Bezug auf Fig. 3 genauer beschrieben wird.

Zur Vorbereitung einer Schlüsselvereinbarung mit der Terminaleinrichtung (vgl. Schritt S7) leitet die Authentisierungseinrichtung 52 in Schritt S4 einen geheimen Sitzungsschlüssel $SK_{Session}$ ab. Dieser geheime Sitzungsschlüssel $SK_{Session}$ bildet zusammen mit dem nachstehend beschriebenen öffentlichen Sitzungsschlüssel $PK_{Session}$ (vgl. Schritt S5) ein Sitzungsschlüsselpaar. Dieses Schlüsselpaar wird in dem Datenträger von der Authentisierungseinrichtung 52 allerdings nur in Verbindung mit einer einzigen Authentisierung gegenüber einer Terminaleinrichtung verwendet. Zum Durchführen jeder zukünftigen, weiteren Authentisierung wird durch die Authentisierungseinrichtung 52, in der nachfolgend beschriebenen Weise, jeweils ein neues Sitzungsschlüsselpaar aus dem datenträgerindividuellen Schlüsselpaar SKi, PKi abgeleitet.

Das Sitzungsschlüsselpaar wird ebenfalls mit Hilfe einer randomisierten Komponente gebildet. Dazu wird von der Authentisierungseinrichtung 52 eine zweite Zufallszahl $RND_{Session}$ erzeugt oder bereitgestellt. Der geheime Sitzungsschlüssel $SK_{Session}$ berechnet sich dann aus einer Multiplikation des datenträgerindividuellen geheimen Schlüssels SKi mit der zweiten Zufallszahl $RND_{Session}$.

Der öffentliche Sitzungsschlüssel $PK_{Session}$ wird in Schritt S5 als Ergebnis der Exponentiation des datenträgerindividuellen öffentlichen Schlüssels $PK_i$ mit der zweiten Zufallszahl $RND_{Session}$ abgeleitet. In Schritt S6 sendet die Authentisierungseinrichtung 52 den öffentlichen Sitzungsschlüssel $PK_{Session}$, den Wert $RND_i*RND_{Session}$, der sich aus der Multiplikation der ersten und der zweiten Zufallszahl ergibt, sowie das Zertifikat $C_{PK}$ an die Terminaleinrichtung.

In Schritt S7 wird nun zwischen der Authentisierungseinrichtung 52 des Datenträgers 10 und der Terminaleinrichtung ein Kommunikationsschlüssel KK vereinbart. Dieser dient zur Verschlüsselung einer nachfolgenden Datenkommunikation zwischen dem Datenträger 10 und der Terminaleinrichtung mittels eines symmetrischen Verschlüsselungsverfahrens. Die Schlüsselvereinbarung kann mit bekannten Verfahren durchgeführt werden, beispielsweise dem Diffie-Hellman-Schlüsselaustauschverfahren.

Abschließend prüft die Terminaleinrichtung in Schritt S8 die Authentizität des Datenträgers 10. Dazu prüft sie in einem ersten Teilschritt TS81 das Zertifikat $C_{PK}$ des öffentlichen Gruppenschlüssels PK, welcher dem Terminal bekannt ist. Anschließend verifiziert die Terminaleinrichtung den öffentlichen Sitzungsschlüssel $PK_{Session}$ des Datenträgers 10. Dazu berechnet die Terminaleinrichtung das Ergebnis der Exponentiation des öffentlichen Gruppenschlüssels mit dem Produkt $RND_i*RND_{Session}$ der beiden Zufallszahlen und vergleicht dieses Ergebnis mit dem öffentlichen Sitzungsschlüssel $PK_{Session}$. Durch diese Berechnung vollzieht die Terminaleinrichtung die Ableitung des öffentlichen Sitzungsschlüssels $PK_{Session}$, ausgehend von dem öffentlichen Gruppenschlüssel PK über den datenträgerindividuellen öffentlichen Schlüssel $PK_i$,nach. Dies gilt, da

$$PK_{Session} \quad = PK_i{}^{\wedge}(RND_{Session}) \qquad \text{(vgl. Schritt S5)}$$

$$= (g^{\wedge}(SK_i))^{\wedge}(RND_{Session}) \qquad \text{(vgl. Teilschritt TS32)}$$

$$= (g^{\wedge}(SK*RND_i))^{\wedge}(RND_{Session}) \qquad \text{(vgl. Teilschritt TS31)}$$

$$= (g^{\wedge}SK)^{\wedge}(RND_i*RND_{Session}) \qquad \text{(math. Umformulierung)}$$

$$= PK^{\wedge}(RND_i*RND_{Session}) \qquad \text{(vgl. Schritt S1)}.$$

Stimmt das Ergebnis mit dem öffentlichen Sitzungsschlüssel $PK_{Session}$ überein, gilt der Datenträger 10 als verifiziert. Im gegenteiligen Fall bricht die Terminaleinrichtung das Authentisierungsverfahren ab.

Das Verfahren ermöglicht es somit, dass der Nutzer des Datenträgers 10 - zumindest innerhalb der Gruppe von Datenträgern, die demselben Gruppenschlüsselpaar SK, PK zugeordnet sind - anonym bleiben kann. Es ist nicht möglich, die Verwendung des Datenträgers 10 auf den Nutzer zurückzuverfolgen, da einerseits pro Sitzung wechselnde Sitzungsschlüssel $SK_{Session}$, $PK_{Session}$ verwendet werden und andererseits die Verifikation des Datenträgers 10 lediglich mittels des Zertifikats $C_{PK}$ des öffentlichen Gruppenschlüssels PK erfolgt - der für alle Datenträger der Gruppe gleich ist - und nicht mittels eines datenträgerindividuellen Zertifikats. Weiterhin vorteilhaft ist, dass ein Speichern des geheimen Gruppenschlüssels SK in den Datenträgern 10 der Gruppe verzichtbar ist.

Im Rahmen der vorliegenden Lösung kann eine Multiplikation eine beliebige gruppenspezifische Multiplikation und eine Exponentiation eine beliebige gruppenspezifische Exponentiation sein. Multiplikation und Exponentiation können auf Basis des diskreten Logarithmus oder auf Basis elliptischer Kurven durchgeführt werden. Zudem kann man bei der Ableitung beispielsweise des individuellen Schlüssels $SK_i = SK*RND_i$ eine modifizierte Ableitung verwenden, um die Berechnung von SK zu erschweren. Beispielsweise kann gewählt werden: $SK_i = RND_i{}^{\wedge} SK$.

**Patentansprüche**

1. Verfahren zum Authentisieren eines portablen Datenträgers (10) gegenüber einer Terminaleinrichtung, mit den Schritten:

   - Ableiten (S5) eines öffentlichen Sitzungsschlüssel ($PK_{Session}$) aus einem von einem öffentlichen Gruppenschlüssel (PK) abgeleiteten (TS32) datenträgerindividuellen öffentlichen Schlüssel ($PK_i$) und eines geheimen Sitzungsschlüssel ($SK_{Session}$) (S4) aus einem von einem geheimen Gruppenschlüssel (SK) abgeleiteten (TS31) datenträgerindividuellen geheimen Schlüssel ($SK_i$) in dem Datenträger (10);
   - anonymes Authentisieren (S8) des Datenträgers (10) gegenüber der Terminaleinrichtung unter Verwendung des geheimen Sitzungsschlüssels ($SK_{Session}$) in dem Datenträger (10) und eines Zertifikats ($C_{PK}$) des öffentlichen Gruppenschlüssels (PK), welches in dem Datenträger (10) gespeichert ist.

2. Verfahren nach Anspruch 1, **dadurch gekennzeichnet, dass** die Terminaleinrichtung den öffentlichen Sitzungsschlüssel ($PK_{Session}$) mittels des Zertifikats ($C_{PK}$) des öffentlichen Gruppenschlüssels (PK) verifiziert, welches in dem Datenträger (10) gespeichert ist, indem die Terminaleinrichtung zunächst das Zertifikat ($C_{PK}$) prüft (TS81) und danach die Ableitung des öffentlichen Sitzungsschlüssels ($PK_{Session}$) aus dem öffentlichen Gruppenschlüssel (PK) über den datenträgerindividuellen öffentlichen Schlüssel ($PK_i$) nachvollzieht (TS82).

3. Verfahren nach Anspruch 1 oder 2, **dadurch gekennzeichnet, dass** der datenträgerindividuelle öffentliche Schlüssel ($PK_i$) und der datenträgerindividuelle geheime Schlüssel ($SK_i$) in einer Personalisierungsphase des Datenträgers (10) von dem öffentlichen Gruppenschlüssel (PK) bzw. dem geheimen Gruppenschlüssel (SK) abgeleitet und in dem Datenträger (10) gespeichert werden (S3).

4. Verfahren nach einem der Ansprüche 1 bis 3, **dadurch gekennzeichnet, dass** der datenträgerindividuelle geheime Schlüssel ($SK_i$) von dem geheimen Gruppenschlüssel (SK) unter Verwendung einer ersten Zufallszahl ($RND_i$) abgeleitet wird.

5. Verfahren nach einem der Ansprüche 1 bis 4, **dadurch gekennzeichnet, dass** der öffentliche Sitzungsschlüssel ($PK_{Session}$) und der geheime Sitzungsschlüssel ($SK_{Session}$) von dem datenträgerindividuellen öffentlichen Schlüssel ($PK_i$) bzw. dem datenträgerindividuellen geheimen Schlüssel ($SK_i$) unter Verwendung einer zweiten Zufallszahl

($RND_{Session}$) abgeleitet wird.

**6.** Verfahren nach einem der Ansprüche 1 bis 5, **gekennzeichnet durch,** Vereinbaren (S7) eines Kommunikationsschlüssels (KK) zwischen dem Datenträger (10) und der Terminaleinrichtung unter Verwendung des öffentlichen Sitzungsschlüssels (PKSession) und des geheimen Sitzungsschlüssels (SKSession) des Datenträgers (10) sowie eines öffentlichen Terminalschlüssels und eines geheimen Terminalschlüssels der Terminaleinrichtung.

**7.** Verfahren nach einem der Ansprüche 1 bis 6, **dadurch gekennzeichnet, dass** der geheime Sitzungsschlüssel ($SK_{Session}$) durch Multiplikation des datenträgerindividuellen geheimen Schlüssels ($SK_i$) mit der zweiten Zufallszahl ($RND_{Session}$) abgeleitet wird (S4) und der öffentliche Sitzungsschlüssel ($PK_{Session}$) durch Exponentiation des datenträgerindividuellen öffentlichen Schlüssels ($PK_i$) mit der zweiten Zufallszahl ($RND_{Session}$) abgeleitet wird (S5).

**8.** Verfahren nach einem der Ansprüche 1 bis 7, **dadurch gekennzeichnet, dass** der Datenträger (10) den öffentlichen Sitzungsschlüssel (PKsession), das Produkt ($RND_i*RND_{Session}$) der ersten ($RND_i$) mit der zweiten Zufallszahl ($RND_{Session}$) sowie das Zertifikat ($C_{PK}$) des öffentlichen Gruppenschlüssels (PK) an die Terminaleinrichtung sendet.

**9.** Verfahren nach einem der Ansprüche 1 bis 8, **dadurch gekennzeichnet, dass** die Terminaleinrichtung zum Verifizieren des öffentlichen Sitzungsschlüssels ($PK_{Session}$) eine Exponentiation des öffentlichen Gruppenschlüssels (PK) mit dem Produkt ($RND_i*RND_{Session}$) der ersten ($RND_i$) und der zweiten Zufallszahl ($RND_{Session}$) bildet.

**10.** Verfahren nach einem der Ansprüche 1 bis 9, **dadurch gekennzeichnet, dass** zum Ableiten datenträgerindividueller öffentlicher Schlüssel ($PK_i$) und datenträgerindividueller geheimer Schlüssel ($SK_i$) einer Mehrzahl verschiedener Datenträger (10) jeweils dieselben öffentlichen bzw. geheimen Gruppenschlüssel (PK; SK) verwendet werden.

**11.** Portabler Datenträger (10), umfassend einen Prozessor (30), einen Speicher (50) und eine Datenkommunikationsschnittstelle (20; 20') zur Datenkommunikation mit einer Terminaleinrichtung sowie eine Authentisierungseinrichtung (52), **dadurch gekennzeichnet, dass** die Authentisierungseinrichtung (52) des Datenträgers (10) eingerichtet ist, einen öffentlichen Sitzungsschlüssel ($PK_{Session}$) aus einem in dem Speicher (50) gespeicherten datenträgerindividuellen öffentlichen Schlüssel ($PK_i$) abzuleiten, einen geheimen Sitzungsschlüssel (PKsession) aus einem in dem Speicher (50) gespeicherten datenträgerindividuellen geheimen Schlüssel ($SK_i$) abzuleiten und den geheimen Sitzungsschlüssels ($SK_{Session}$) im Rahmen einer Authentisierung gegenüber der Terminaleinrichtung zu verwenden, wobei der datenträgerindividuelle öffentliche Schlüssel ($PK_i$) von einem öffentlichen Gruppenschlüssel (PK) abgeleitet ist und der datenträgerindividuelle geheime Schlüssel ($SK_i$) von einem geheimen Gruppenschlüssel (SK) abgeleitet ist und der Datenträger ein Zertifikat ($C_{PK}$) des öffentlichen Gruppenschlüssels (PK) für die Authentisierung speichert.

**12.** Datenträger (10) nach Anspruch 11, **dadurch gekennzeichnet, dass** der Datenträger (10) eingerichtet ist, sich gegenüber einer Terminaleinrichtung gemäß einem Verfahren nach einem der Ansprüche 1 bis 10 zu authentisieren.

**13.** Terminaleinrichtung zur Datenkommunikation mit einem portablen Datenträger (10) nach Anspruch 11 oder 12, wobei die Terminaleinrichtung eingerichtet ist, unter Verwendung eines öffentlichen Terminalschlüssels und eines geheimen Terminalschlüssels einen Kommunikationsschlüssel (KK) mit dem portablen Datenträger (10) zu vereinbaren und den öffentlichen Sitzungsschlüssel (PKsession) des Datenträgers (10), welcher von dem öffentlichen Gruppenschlüssel (PK) über den datenträgerindividuellen öffentlichen Schlüssel ($PK_i$) abgeleitet worden ist, zu verifizieren.

**14.** Terminaleinrichtung nach Anspruch 13, **dadurch gekennzeichnet, dass** die Terminaleinrichtung eingerichtet ist, den öffentlichen Sitzungsschlüssel ($PK_{Session}$) des Datenträgers (10) mittels des Zertifikats ($C_{PK}$) des öffentlichen Gruppenschlüssels (PK) zu verifizieren, welches in dem Datenträger (10) gespeichert ist, indem die Terminaleinrichtung zunächst das Zertifikat ($C_{PK}$) prüft und danach die Ableitung des öffentlichen Sitzungsschlüssels ($PK_{Session}$) aus dem öffentlichen Gruppenschlüssel (PK) über den datenträgerindividuellen öffentlichen Schlüssel ($PK_i$) nachvollzieht.

**15.** System, umfassend einen portablen Datenträger (10) nach Anspruch 11 oder 12 und eine Terminaleinrichtung nach Anspruch 13 oder 14, eingerichtet zum Durchführen eines Verfahrens nach einem der Ansprüche 1 bis 10.

**Claims**

1. A method for authenticating a portable data carrier (10) to a terminal device, having the steps of:

   - deriving (S5) a public session key ($PK_{Session}$) from a public key ($PK_i$) individual to the data carrier derived (TS32) from a public group key (PK), and deriving a secret session key ($SK_{Sessaon}$) (S4) from a secret key ($SK_i$) individual to the data carrier derived (TS31) from a secret group key (SK), in the data carrier (10);
   - anonymously authenticating (S8) the data carrier (10) to the terminal device while using the secret session key ($SK_{Session}$) in the data carrier (10) and a certificate ($C_{PK}$) of the public group key (PK), which certificate is stored in the data carrier (10).

2. The method according to claim 1, **characterized in that** the terminal device verifies the public session key ($PK_{Session}$) by means of the certificate ($C_{PK}$) of the public group key (PK), which certificate is stored in the data carrier (10), by the terminal device first checking (TS81) the certificate ($C_{PK}$) and thereafter reconstructing (TS82) the derivation of the public session key ($PK_{Session}$) from the public group key (PK) via the public key ($PK_i$) individual to the data carrier.

3. The method according to claim 1 or 2, **characterized in that** the public key ($PK_i$) individual to the data carrier and the secret key ($SK_i$) individual to the data carrier are derived from the public group key (PK) and the secret group key (SK), respectively, and stored (S3) in the data carrier (10) in a personalization phase of the data carrier (10).

4. The method according to any of claims 1 to 3, **characterized in that** the secret key ($SK_i$) individual to the data carrier is derived from the secret group key (SK) while using a first random number ($RND_i$).

5. The method according to any of claims 1 to 4, **characterized in that** the public session key ($PK_{Session}$) and the secret session key ($SK_{Session}$) are derived from the public key ($PK_i$) individual to the data carrier and the secret key ($SK_i$) individual to the data carrier, respectively, while using a second random number ($RND_{Session}$).

6. The method according to any of claims 1 to 5, **characterized by** agreeing (S7) on a communication key (KK) between the data carrier (10) and the terminal device while using the public session key ($PK_{Session}$) and the secret session key ($SK_{Session}$) of the data carrier (10) as well as a public terminal key and a secret terminal key of the terminal device.

7. The method according to any of claims 1 to 6, **characterized in that** the secret session key ($SK_{Session}$) is derived (S4) by multiplication of the secret key ($SK_i$) individual to the data carrier by the second random number ($RND_{Session}$), and the public session key ($PK_{Session}$) is derived (S5) by exponentiation of the public key ($PK_i$) individual to the data carrier by the second random number ($RND_{Session}$).

8. The method according to any of claims 1 to 7, **characterized in that** the data carrier (10) sends to the terminal device the public session key ($PK_{Session}$), the product ($RND_i * RND_{Session}$) of the first random number ($RND_i$) and the second random number ($RND_{Session}$) as well as the certificate ($C_{PK}$) of the public group key (PK).

9. The method according to any of claims 1 to 8, **characterized in that** the terminal device, for verifying the public session key ($PK_{Session}$), forms an exponentiation of the public group key (PK) by the product ($RND_i * RND_{Session}$) of the first random number ($RND_i$) and the second random number ($RND_{Session}$).

10. The method according to any of claims 1 to 9, **characterized in that**, for deriving public keys ($SK_i$) individual to the data carrier and secret keys ($SK_i$) individual to the data carrier of a plurality of different data carriers (10), the same public and secret group keys (PK; SK) are respectively used.

11. A portable data carrier (10), comprising a processor (30), a memory (50) and a data communication interface (20; 20') for data communication with a terminal device, as well as an authentication device (52), **characterized in that** the authentication device (52) of the data carrier (10) is adapted to derive a public session key ($PK_{Session}$) from a public key ($PK_i$) individual to the data carrier that is stored in the memory (50), to derive a secret session key ($PK_{Session}$) from a secret key ($SK_i$) individual to the data carrier that is stored in the memory (50), and to use the secret session key ($SK_{Session}$) within the framework of an authentication to the terminal device, wherein the public key ($PK_i$) individual to the data carrier is derived from a public group key (PK), and the secret key ($SK_i$) individual to the data carrier is derived from a secret group key (SK), and the data carrier stores a certificate ($C_{PK}$) of the public group key (PK) for the authentication.

**12.** The data carrier (10) according to claim 11, **characterized in that** the data carrier (10) is adapted to authenticate itself to a terminal device according to a method according to any of claims 1 to 10.

**13.** A terminal device for data communication with a portable data carrier (10) according to claim 11 or 12, wherein the terminal device is adapted while using a public terminal key and a secret terminal key to agree on a communication key (KK) with the portable data carrier (10) and to verify the public session key ($PK_{Session}$) of the data carrier (10) which has been derived from the public group key (PK) via the public key ($PK_i$) individual to the data carrier.

**14.** The terminal device according to claim 13, **characterized in that** the terminal device is adapted to verify the public session key ($PK_{Session}$) of the data carrier (10) by means of the certificate ($C_{PK}$) of the public group key (PK), said certificate being stored in the data carrier (10), by the terminal device first checking the certificate ($C_{PK}$) and thereafter reconstructing the derivation of the public session key ($PK_{Session}$) from the public group key (PK) via the public key ($PK_i$) individual to the data carrier.

**15.** A system comprising a portable data carrier (10) according to claim 11 or 12 and a terminal device according to claim 13 or 14, adapted for carrying out a method according to any of claims 1 to 10.

**Revendications**

**1.** Procédé d'authentification d'un support de données portable (10) vis-à-vis d'un équipement terminal, comprenant les étapes :

- déduction (S5), dans le support de données (10), d'une clé publique de session ($PK_{Session}$) à partir d'une clé publique ($PK_i$) individuelle au support de données déduite (TS32) d'une clé publique de groupe (PK), et d'une clé secrète de session ($SK_{Session}$) (S4) à partir d'une clé secrète ($SK_i$) individuelle au support de données déduite (TS31) d'une clé secrète de groupe (SK) ;
- authentification (S8) anonyme du support de données (10) vis-à-vis de l'équipement terminal, en ayant recours à la clé secrète de session ($SK_{Session}$) dans le support de données (10), et à un certificat ($C_{PK}$) de la clé publique de groupe (PK) qui est mémorisée dans le support de données (10).

**2.** Procédé selon la revendication 1, **caractérisé en ce que** l'équipement terminal vérifie la clé publique de session ($PK_{Session}$) au moyen du certificat ($C_{PK}$) de la clé publique de groupe (PK) mémorisée dans le support de données (10), ce qui a lieu **en ce que** l'équipement terminal examine (TS81) tout d'abord le certificat ($C_{PK}$), puis retrace (TS82) ensuite la déduction de la clé publique de session ($PK_{Session}$) à partir de la clé publique de groupe (PK) par l'intermédiaire de la clé publique ($PK_i$) individuelle au support de données.

**3.** Procédé selon la revendication 1 ou 2, **caractérisé en ce que** la clé publique ($PK_i$) individuelle au support de données et la clé secrète ($SK_i$) individuelle au support de données sont, pendant une phase de personnalisation du support de données (10), déduites de la clé publique de groupe (PK) ou de la clé secrète de groupe (SK) et mémorisées (S3) dans le support de données (10).

**4.** Procédé selon une des revendications de 1 à 3, **caractérisé en ce que** la clé secrète ($SK_i$) individuelle au support de données est déduite de la clé secrète de groupe (SK), en ayant recours à un premier nombre aléatoire ($RND_i$).

**5.** Procédé selon une des revendications de 1 à 4, **caractérisé en ce que** la clé publique de session ($PK_{Session}$) et la clé secrète de session ($SK_{Session}$) est déduite de la clé publique ($PK_i$) individuelle au support de donnée ou de la clé secrète ($SK_i$) individuelle au support de données, en ayant recours à un deuxième nombre aléatoire ($RND_{Session}$).

**6.** Procédé selon une des revendications de 1 à 5, **caractérisé par** la convention (S7) d'une clé de communication (KK) entre le support de données (10) et l'équipement terminal, en ayant recours à la clé publique de session ($PK_{Session}$) et à la clé secrète de session ($SK_{Session}$) du support de données (10) ainsi qu'à une clé publique de terminal et à une clé secrète de terminal de l'équipement terminal.

**7.** Procédé selon une des revendications de 1 à 6, **caractérisé en ce que** la clé secrète de session ($SK_{Session}$) est déduite (S4) par multiplication de la clé secrète ($SK_i$) individuelle au support de données avec le deuxième nombre aléatoire ($RND_{Session}$), et **en ce que** la clé publique de session ($PK_{Session}$) est déduite (S5) par exponentiation de la clé publique ($PK_i$) individuelle au support de donnée avec le deuxième nombre aléatoire ($RND_{Session}$).

**8.** Procédé selon une des revendications de 1 à 7, **caractérisé en ce que** le support de données (10) envoie la clé publique de session ($PK_{Session}$), le produit ($RND_i *RND_{Session}$) du premier ($RND_i$) avec le deuxième nombre aléatoire ($RND_{Session}$) ainsi que le certificat ($C_{PK}$) de la clé publique de groupe (PK) à l'équipement terminal.

**9.** Procédé selon une des revendications de 1 à 8, **caractérisé en ce que** l'équipement terminal constitue, pour la vérification de la clé publique de session ($PK_{Session}$), une exponentiation de la clé publique de groupe (PK) avec le produit ($RND_i *RND_{Session}$) du premier ($RND_i$) et du deuxième nombre aléatoire ($RND_{Session}$).

**10.** Procédé selon une des revendications de 1 à 9, **caractérisé en ce que**, pour la déduction de clés publiques ($PK_i$) individuelles à des supports de données et de clés secrètes ($SK_i$) individuelles à des supports de données d'une pluralité de supports de dormées (10) différents, ce sont respectivement les mêmes clés publiques ou secrètes de groupe (PK; SK) qui sont utilisées.

**11.** Support de données (10) portable comprenant un processeur (30), une mémoire (50) et une interface de communication de données (20; 20') pour la communication de données avec un équipement terminal, ainsi qu'un équipement d'authentification (52), **caractérisé en ce que** l'équipement d'authentification (52) du support de données (10) est configuré pour déduire une clé publique de session ($PK_{Session}$) à partir d'une clé publique ($PK_i$) individuelle au support de données mémorisée dans la mémoire (50), pour déduire une clé secrète de session ($PK_{Session}$) à partir d'une clé secrète ($SK_i$) individuelle au support de données mémorisée dans la mémoire (50), et pour utiliser la clé secrète de session ($SK_{Session}$) dans le cadre d'une authentification vis-à-vis de l'équipement terminal, cependant que la clé publique ($PK_i$) individuelle au support de données est déduite d'une clé publique de groupe (PK) et que la clé secrète ($SK_i$) individuelle au support de données est déduite d'une clé secrète de groupe (SK) et que le support de données mémorise pour l'authentification un certificat ($C_{PK}$) de la clé publique de groupe (PK).

**12.** Support de données (10) selon la revendication 11, **caractérisé en ce que** le support de données (10) est configuré pour s'authentifier vis-à-vis d'un équipement terminal conformément à un procédé selon une des revendications de 1 à 10.

**13.** Équipement terminal destiné à la communication de données avec un support de données (10) portable selon la revendication 11 ou 12, l'équipement terminal étant configuré pour, en ayant recours à une clé publique de terminal et à une clé secrète de terminal, convenir, avec le support de données (10) portable, d'une clé de communication (KK), et pour vérifier la clé publique de session ($PK_{Session}$) du support de données (10) qui a été déduite de la clé publique de groupe (PK) par l'intermédiaire de la clé publique ($PK_i$) individuelle au support de données.

**14.** Équipement terminal selon la revendication 13, **caractérisé en ce que** l'équipement terminal est configuré pour vérifier la clé publique de session ($PK_{Session}$) du support de données (10) au moyen du certificat ($C_{PK}$) de la clé publique de groupe (PK) mémorisée dans le support de données (10), ce qui a lieu **en ce que** l'équipement terminal examine tout d'abord le certificat ($C_{PK}$), puis retrace ensuite la déduction de la clé publique de session ($PK_{Session}$) à partir de la clé publique de groupe (PK) par l'intermédiaire de la clé publique ($PK_i$) individuelle au support de données.

**15.** Système comprenant un support de données (10) portable selon la revendication 11 ou 12 et un équipement terminal selon la revendication 13 ou 14, configuré pour l'exécution d'un procédé selon une des revendications de 1 à 10.

FIG 1

# FIG 2

Erzeugen des geheimen
Gruppenschlüssels SK und des
öffentlichen Gruppenschlüssels PK: $= g^{SK}$ — S1

Erzeugen des Zertifikats $C_{PK}$ für PK — S2

Für einen Datenträger i:

Ableiten des datenträgerinternen
geheimen Schlüssels $SK_i$: $= SK \cdot RND_i$ — TS31

— S3

Ableiten des datenträgerinternen
öffentlichen Schlüssels $PK_i$: $= g^{SK_i}$ — TS32

Speichern von $SK_i$, $PK_i$, $RND_i$ und $C_{PK}$
in Datentreäger i — TS33

(A)

# FIG 3

(A)

Ableiten eines geheimen Sitzungsschlüssels
$SK_{Session} := SK_i \cdot RND_{Session}$ — S4

Ableiten eines öffentlichen Sitzungsschlüssels
$PK_{Session} := PK_i^{RND_{Session}}$ — S5

Senden von $PK_{Session}$, $RND_i \cdot RND_{Session}$
und $C_{PK}$ an Terminaleinrichtung — S6

Vereinbaren eines geheimen
Kommunikationsschlüssels KK — S7

Prüfung von $C_{PK}$ — TS81

Verifikation von $PK_{Session}$:
$PK_{Session} \overset{?}{=} PK^{RND_i \cdot RND_{Session}}$ — TS82

— S8

⋮

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006089101 A2

**In der Beschreibung aufgeführte Nicht-Patentliteratur**

- **KIYOMOTO et al.** Anonymous Attribute Authentication Scheme Using Self-Blindable Certificates. *ISI,* 2008